# EUROPEAN PATENT APPLICATION

(11) **EP 1 860 627 A1**
(43) Date of publication of application: **28.11.2007**
(21) Application number: 06019326.5
(22) Date of filing: 15.09.2006
(51) Int. Cl.: G08B 25/14, G08B 21/24, G06Q 10/00

(54) **Multi event monitoring and reminder device**

(30) Priority: 25.07.2006 US 492599
(71) Applicant: Wem Technology Limited, Tai Po, N.T., Hong Kong (CN)
(72) Inventor: Cheng, Amy Decem, 53 Ting Kok Road Tai Po, N.T. Hong Kong (CN)
(74) Representative: Capasso, Olga

(57) **Abstract**

A multi-event monitoring and reminder device is provided which permits a user to simultaneously view and monitor the status which includes time, temperature, or others of a plurality of events while also permitting the user to assign descriptive labels to the events being monitored. An objective of the device is to monitor local time, world time of various cities, pre-recorded voice messages, weather conditions & warnings, traffic congestion conditions, food preparation, food consumption, body weight tracking, etc. Another objective of the device is to provide audio, visual and vibration reminding means that alerts a user about a plurality of events such as the expiration of the designated time period for the event being timed or the event has reached the designated clock time, the date and time of the voice messages being recorded, the durations of pre-recorded voice messages, new voice messages being unread, congested traffic conditions, adverse weather warnings, etc.

## Description

### FIELD OF THE INVENTION

The present invention pertains to the field of multiple monitoring and reminder devices.

### BACKGROUND OF THE INVENTION

Currently devices having multiple monitoring abilities, such as triple kitchen timers and stopwatches, are being used in various time-sensitive activities, such as cooking and sports. Typically, such devices identify the events being timed as numbers, such as 1, 2, 3, etc., or other generic identifiers.

The shortcoming for using such vague identifiers is that each number is fairly meaningless with regard to the event being timed. As a result, when a user has multiple timed events running at more or less the same duration, it can be difficult to subsequently associate the proper time with the event being monitored. Conclusion and guessing can result in adverse consequences (e.g. , over- or undercooked food) . Additionally, the beeps typically associated with the expiration of a particular timer fail to further assist the user in identifying the event being tracked.

Accordingly, it is an objective of the present invention to provide a monitoring and reminder device that simultaneously monitors and displays the time progress of multiple events while permitting the user to assign descriptive labels as reminders to each event. This device also monitors local time, world time of multiple cities, weather conditions & warnings, traffic congestion conditions, food preparation, voice messaging, food consumption, body weight tracking, etc.

It is also an objective to provide audio, visual and vibrational reminding means that alerts a user about the expiration of the designated time period for the event being monitored, the date and time of the voice messages being recorded, the durations of pre-recorded voice messages, new voice messages being unread, congested traffic conditions, adverse weather warnings, etc.

### SUMMARY OF THE INVENTION

The present device pertains to a multi-event monitoring and reminder device which permits a user to simultaneously view and monitor the status (including time, temperature....) for a plurality of events while also permitting the user to assign descriptive labels to the events being monitored. It also monitors local time, world time of various cities, pre-recorded voice messages, weather conditions & warnings, traffic congestion conditions, food preparation, food consumption, body weight tracking, etc. It is also an objective to provide audio, visual and vibrational reminding means that alerts a user about a plurality of events such as the expiration of the designated time period for the event being timed, the date and time of the voice messages being recorded, the durations of pre-recorded voice messages, new voice messages being unread, congested traffic conditions, adverse weather warnings, etc.

The present device comprises a monitoring means, a labeling means, a reminding means and a display means. In a preferred embodiment, the monitoring means comprise one or more independent time monitors, one or more independent clock alarms, world time of one or more independent cities, and one or more voice messages. The labeling means comprise labels which may be selected from a pre-stored list or a list created and saved by the user. Certain areas on the display are reserved or designated to show the labels. Through the user's input interface, a unique label is selected for each event and such labels can either be pre-stored in the device or be defined by the user. This label selection can be done before the event starts, or after it starts. The reminding means comprise of audible sound, iconic and text information display, LED indication, color of lighting and vibration motions.

### BRIEF DESCRIPTION OF THE DRAWINGS

Other important objects and features of the invention will be apparent from the following Detailed Description of the Invention taken in connection with the accompanying drawings in which:
Figure 1 is a front right perspective view of the multi event monitoring and reminder device in accordance with the present design.
Figure 2 is a rear left perspective view of the device shown in Figure 1.
Figure 3 is a front right perspective view of the device shown in Figure 1 with the removable timer in an upright position.
Figure 4 is a front right perspective view of the device shown in Figure 1 with the removable timer detached from the device.

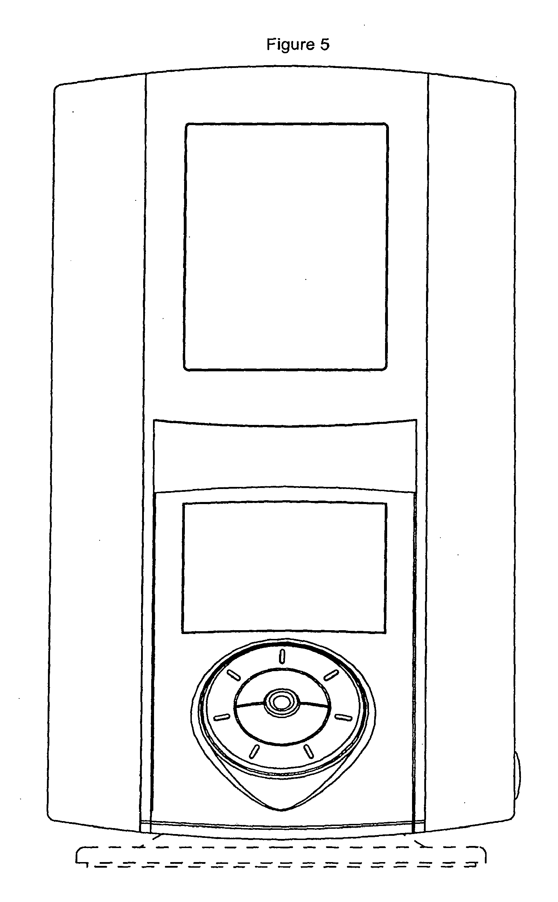

Figure 5 is a front view of the device shown in Figure 1.
Figure 6 is a rear view of the removable timer shown in Figure 3 with a stand and battery cover.
Figure 7 is a front right perspective view of the removable timer shown in Figure 6.
Figure 8 is a rear left perspective view of the removable timer shown in Figure 6 with the stand extended.
Figure 9 is a right side view of the removable timer shown in Figure 6 with the stand extended.
Figure 10 is a front view of the removable timer shown in Figure 6.
Figure 11 is a front right perspective view of the removable timer shown in Figure 6 with the stand extended.
Figure 12 is a top view of the removable timer shown in Figure 6 with the stand extended.
Figure 13 is a rear view of the removable timer shown in Figure 3 without a stand.
Figure 14 is a front right perspective view of the removable timer shown in Figure 13.
Figure 15 is a rear left perspective view of the removable timer shown in Figure 13.

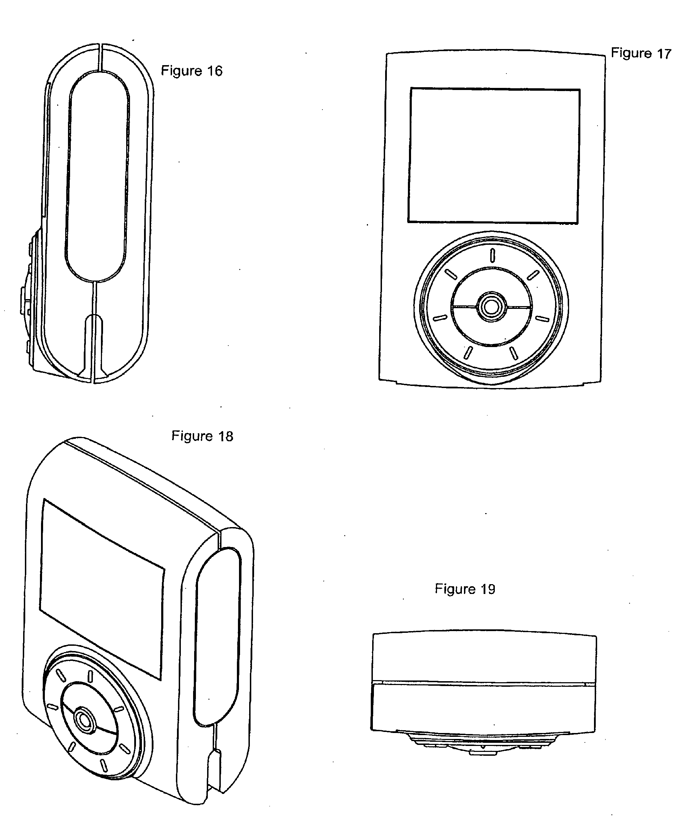

Figure 16 is a right side view of the removable timer shown in Figure 13.
Figure 17 is a front view of the removable timer shown in Figure 13.
Figure 18 is a front right perspective view of the removable timer shown in Figure 13.
Figure 19 is a top view of the removable timer shown in Figure 13.

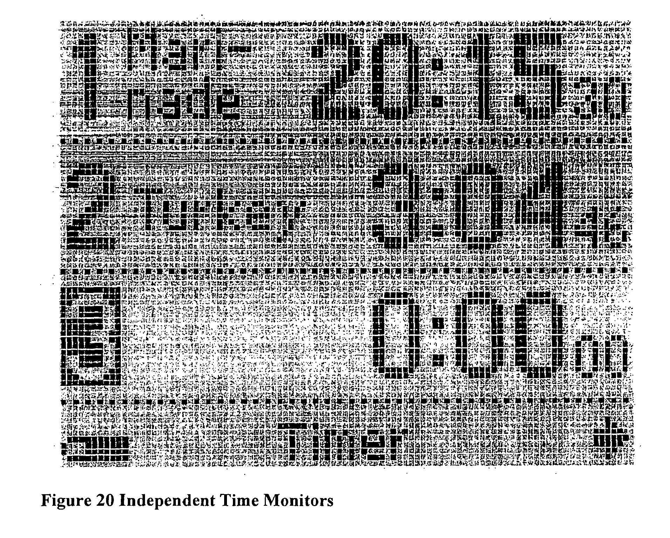

Figure 20 is a front plan view of the three independent time monitors.

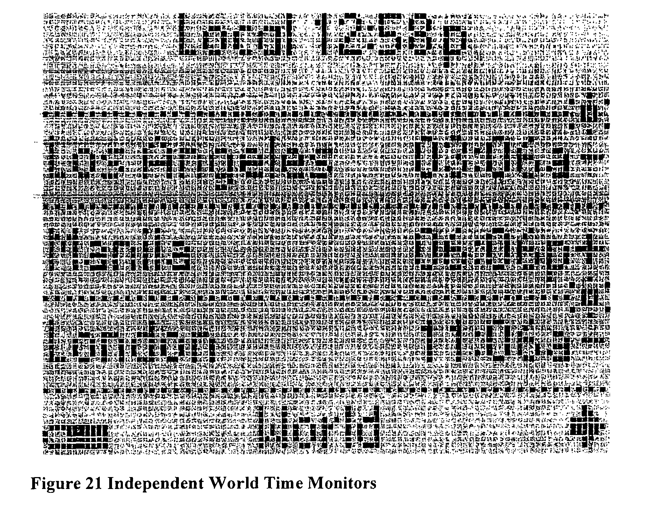

Figure 21 is a front plan view of the three independent world time monitors.

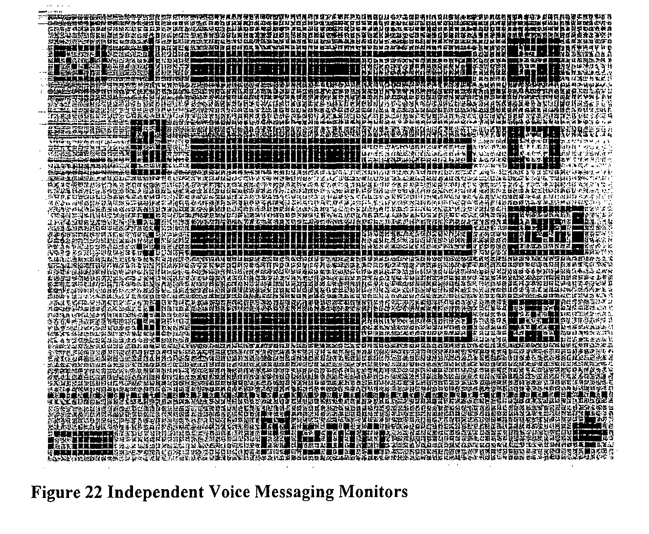

Figure 22 is a front plan view of the four independent voice messaging monitors.

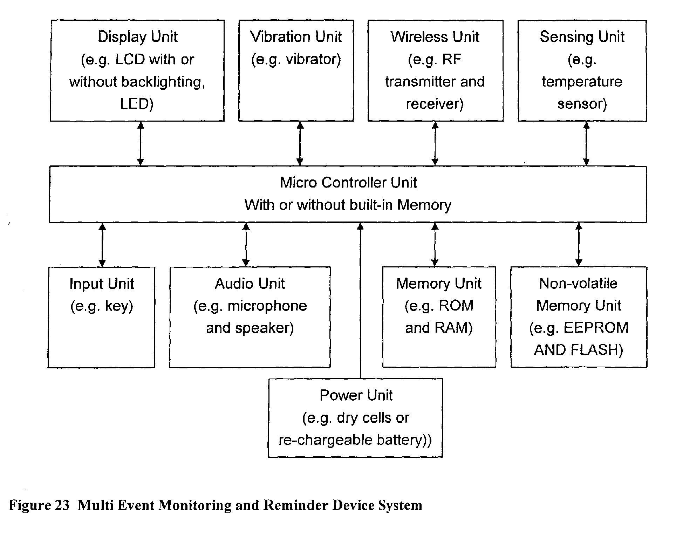

Figure 23 is a block diagram of the multi-event monitoring and reminder device system depicting the display unit, vibration unit, wireless unit, sensing unit, input unit, audio unit, memory unit, non-volatile memory unit and power unit as they connect and interrelate with the micro controller unit.

### DETAILED DESCRIPTION OF THE INVENTION

The present invention pertains to a multi-event monitoring and reminder device, which permits a user to simultaneously view and track information for a plurality of events. The user is permitted to assign descriptive labels to events being tracked, time being one of them. Tracking of these events may be begun by the user or initiated by a triggering event. The present device comprises a monitoring means, a labeling means, a reminding means, and a display means.

The monitoring means comprise a plurality of independent time monitors. Each time monitor can function as a countdown timer a count-up stopwatch, or a clock alarm. When used as a countdown timer, the monitor will count down to zero beginning from the initial time period entered by the user. When used as a count-up stopwatch, the monitor will measure the time period spanning between the point when time counting is initiated and the point when time counting is ended by the user. In either function, the time monitor can be stopped/paused and subsequently restarted to resume counting. The present device will display the relevant time period in units of hours, minutes, and seconds, as applicable. When used as a clock alarm, the monitor will alert the user when the preset clock time has been reached. The present device will display the relevant clock time in hours and minutes.

Additionally, the monitoring means also comprise of keeping track of the local time and, the world time for a plurality of selectable cities. Each world time monitor can calculate the local time for an individual city, based on the time zone information pre-stored inside the device's memory. In a preferred embodiment, the monitoring means comprises 3 independent time monitors.

In another embodiment the multi event recording device is used to monitor weather conditions and warnings, traffic congestion conditions, voice messaging, food preparation, food consumption, body weight tracking, etc.

In a specific embodiment the device will monitor the events supra by a triggering event, e.g. a laser line trip. In another embodiment initiating the triggering event will begin timing the monitored event. In another embodiment the triggering event will begin the assignment of descriptive labels to the monitored events.

Furthermore, the monitoring means comprise a plurality of independent voice messages. Each message monitor can hold a pre-recorded voice message in certain duration. When used in a recording mode, the message monitor will record the voice into the memory through a microphone. The date and time of the message being recorded will also be stored. When there is a new message recorded, but not heard, an audible alert will inform the user that there is a new message waiting. When used in a playback mode, the tracker will amplify the pre-recorded voice from memory to audible signal through a speaker. After the new message has been heard, the new message alert will be disabled. A new message alert can be enabled again to alert another user through adjusting the user input interface. In a preferred embodiment, the voice messaging monitors comprise of one or more independent voice message monitors for which each has at least 1 second in duration. In another preferred embodiment, the new message alert comprises a LCD display and a LED indicator.

The monitoring means may have at least one but may have more than 3 time monitors, 3 alarms, 4 world time, and 4 voice messages, whereby the number is limited only by the desire to simultaneously display all monitors and the desire to keep the present device portable.

The labeling means comprise labels which can be assigned to the events being timed and events being set for alarm so as to enable a user to meaningfully identify the events. The labels can be selected from a pre-stored list of labels for common events, such as food preparation (e.g., baking chicken, marinating steaks), household chores (e.g., drying clothes, bleaching), medical care (e.g., administration of medication), professional activities (e.g., client billing), academics, entertainment (e.g., sports, games), and other time-sensitive activities. To build a user-defined label, by selecting the "New Label" item from the label list, there is a text entry function for the user input interface to select alphabets to become a label. Once the new label has been confirmed, it will be saved in the device's memory for future recall. All user-defined labels can be modified, or deleted from the list. All items in the label list are sorted in alphabetical order to make the selection process easier and faster. Additionally, the user can utilize the text entry function of the user interface to create a label describing the event being timed. In turn, the labels created can be saved in the device's memory for future recall.

The present device further comprises a reminding means for alerting a user about a plurality of events such as the expiration of the designated time period for the event being timed, the date and time of the voice messages being recorded, the durations of pre-recorded voice messages, new voice messages being unread, congested traffic conditions, adverse weather warnings, etc.

The reminding means comprise the generation of an audible sound such as beeps, rhythm or pre-recorded voice messages. This particular embodiment may be suitable in circumstances where the present device is being kept in the proximity of the user and the audible sound will not disturb non-users who may be within auditory range.

Furthermore, the reminding means comprise activation and/or color changing LED illumination and/or liquid-crystal display (LCD) backlight. This embodiment may be advantageous in quiet areas where noise is desired to be kept to a minimum. Conversely, this embodiment may also be advantageous in loud work environments (e.g., factory, plant) where a beeping and/or vibrating device would go unnoticed due to the clamor and vibrations of the surroundings (e.g., manufacturing area with active machinery). Furthermore, hearing-impaired individuals, who would otherwise not be able to sense the sound and/or voice recordings but can see the flashing backlight, may be able to utilize the present device.

Additionally, the reminding means comprise vibrational notification. This embodiment may be beneficial in situations where audible sound and voice recordings will not be well-received (e.g., sleeping baby in the room, child studying, room-mate working).

As noted above, the various notification means may be used in combination with each other as the user sees fit (e.g., vibration, audible sound backlight and others).

The display means comprise a liquid-crystal display (LCD) which simultaneously displays the plurality of times for the events being monitored in connection with their respective identifying labels. Thus, a user can view all events within the same category being tracked along with their respective times in a single glance without having to switch between the various events. One can view other events by switching to the desired categories.

Furthermore, the monitoring and reminder device comprise three separate units: 1) a remote sensor, 2) a removable timer, and 3) a main unit. The remote sensor can be located in both an indoor or outdoor environment. It functions to measure the humidity and temperature at its location; communicates and uploads the recorded data to the main unit via a wireless link; displays the data on its own LCD screen; and is capable of either being wall mounted or sit on a flat surface. The removable timer docks into the main unit but also is removable from the main unit to be taken anywhere. It has a display screen; independent count down timers, stopwatch and start timers by which the user can select the food type to aid the user in identifying the specific food type that the timer is tracking or measuring; independent clock alarms by which the user can select labels to track the various events being set for alarm; a world time function containing a library of countries to allow the user at any one time to monitor and follow the time from three countries; a power saving device to conserve power; and is capable of standing independently of the main unit. The main unit sits on a flat surface; has a LCD display; functions as a timer, world timer, voice memo and system setting; is capable of receiving data from the remote sensor units via a wireless link; is capable of measuring indoor temperature and humidity and weather forecasting and then displaying this data on its own LCD; is capable of being a night-light when ambient lighting is dark; and features a built in dictaphone and radio controlled clock.

In a preferred embodiment the removable timer is docked to and used in conjunction with the main unit. In another embodiment the removable timer may be used independently of the main unit to afford greater flexibility of use.

In another preferred embodiment the removable timer may act in unison with the remote sensor so as to display all the information as noted supra.

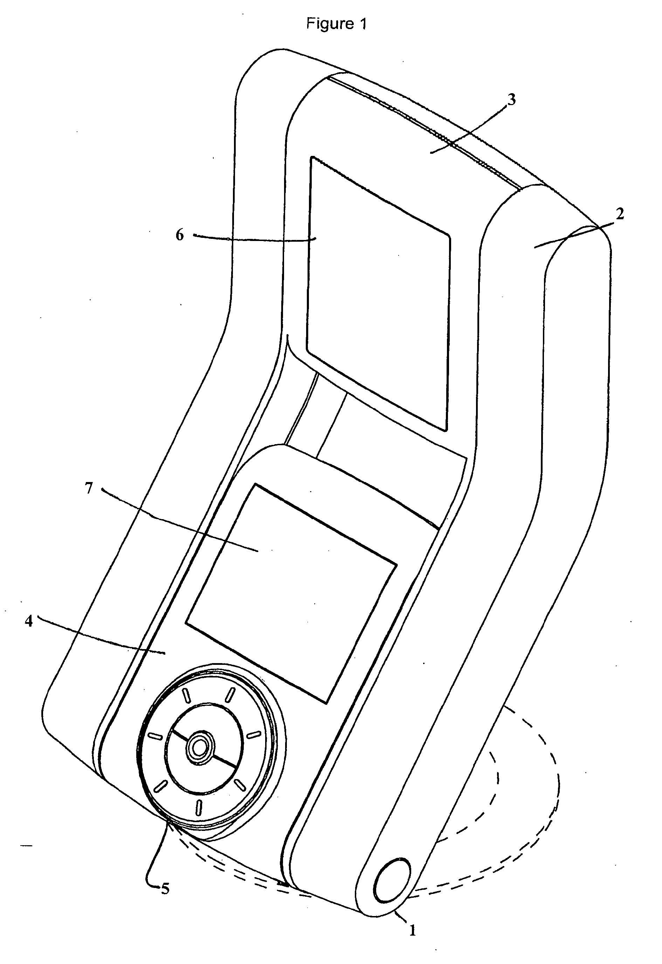

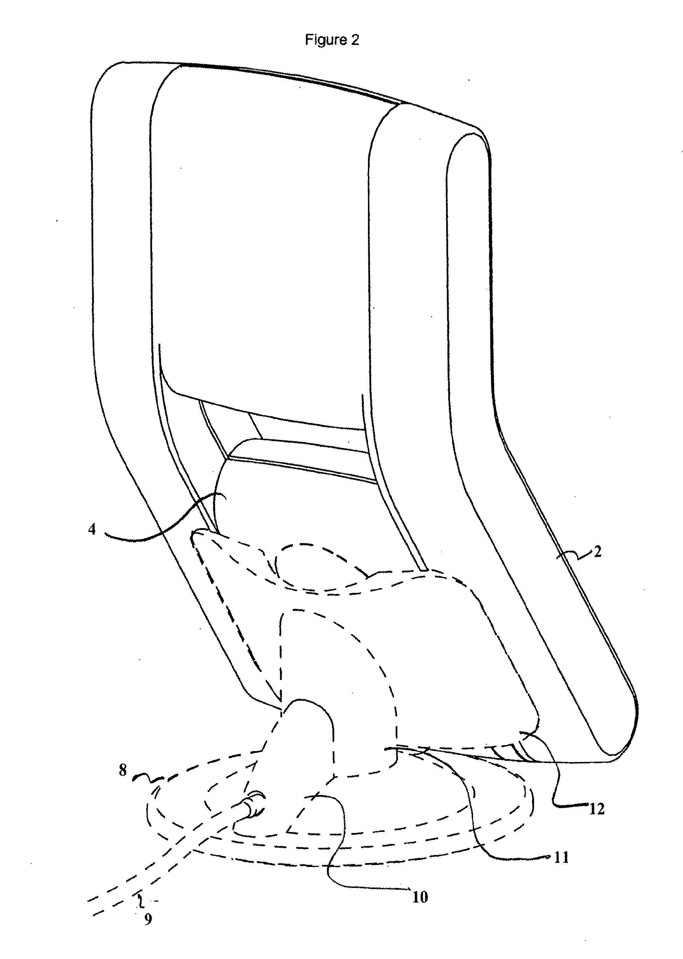

Referring to Figures 1 and 2, a front right and rear left perspective view of the multi event monitoring and recording device 1 are shown. The device consists of three units: the main unit 2, a remote sensor 3, and removable timer 4. The removable timer is enclosed within the protective casing of the main unit 2. The main unit 2 consists further of a manual control dial 5 by which the user selects the preferred mode of operation of the device. Further the remote sensor 3 and removable timer 4 are each provided with a display device. The remote sensor display 6 and removable timer display 7 are made of a liquid display element or a LED or the like and allow for activation and/or change of color of the LED illumination and/or liquid crystal display (LCD) backlight.

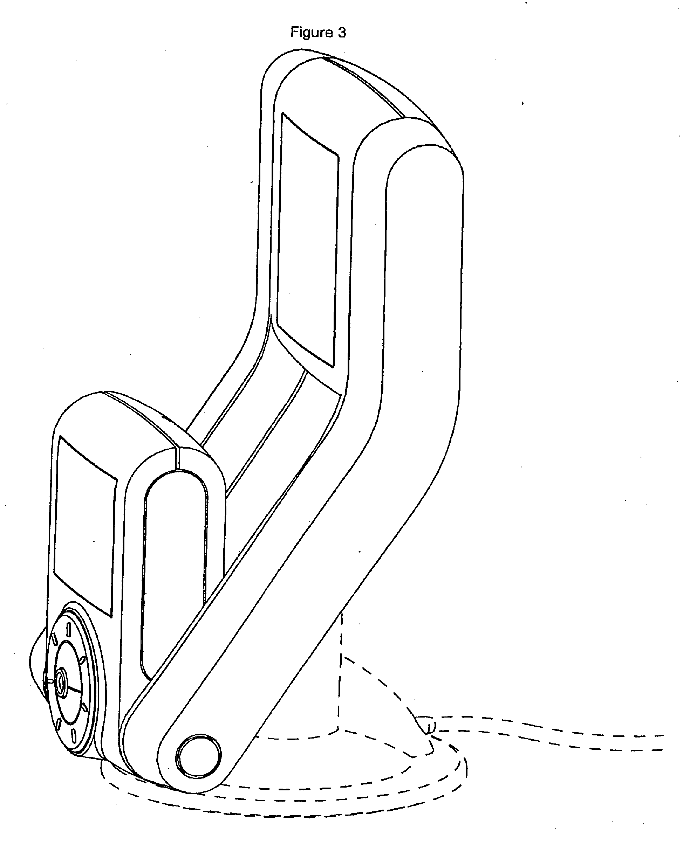

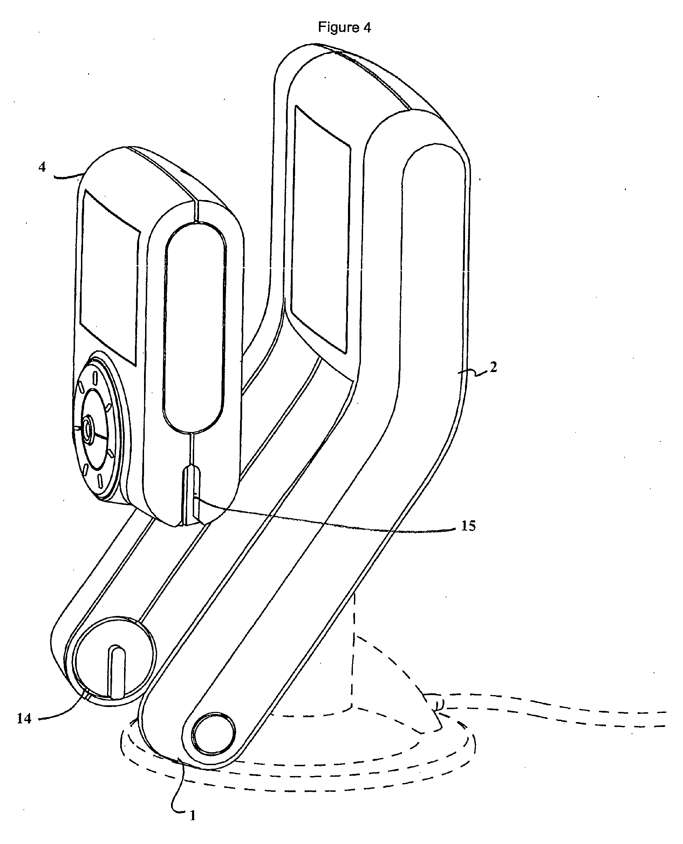

Referring to Figure 2, the removable timer 4 is shown docked to the main unit 2. As shown in figure 4 the removable timer 4 may be removed from the main unit 2. Further as shown in Figure 3, the removable timer 4 may lie in a prone position within the protective housing of the main unit 2 or, as shown in Figure 3 lie an upright position within the protective housing of the main unit 2. The main unit 2 sits on a flat surface due to the base stand 8 as shown in Figure 2. A power saving device 9 is provided which powers the multi event monitoring and reminder device 1 through the input terminal 10 which lies connected to base stand 8 as shown in Figure 2. Reinforcing support 11 and lateral support 12 provide structural support to main unit 1 as well as providing an electrical housing for power saving device 9 to the main unit 2.

Referring to Figure 4, grooved anchors 14 which lie at the base of main unit 2 provide support guides to anchor removable timer 4. Further removable timer 4 is provided with anchor slots 15 to match grooved anchors 14 to allow a snug secure yet detachable fit between removable timer 4 and main unit 2.

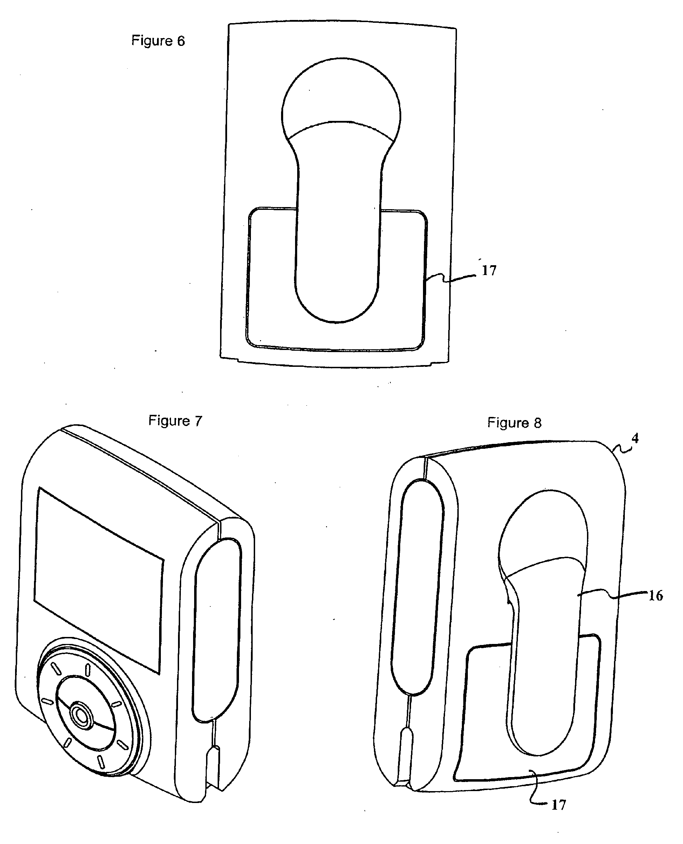

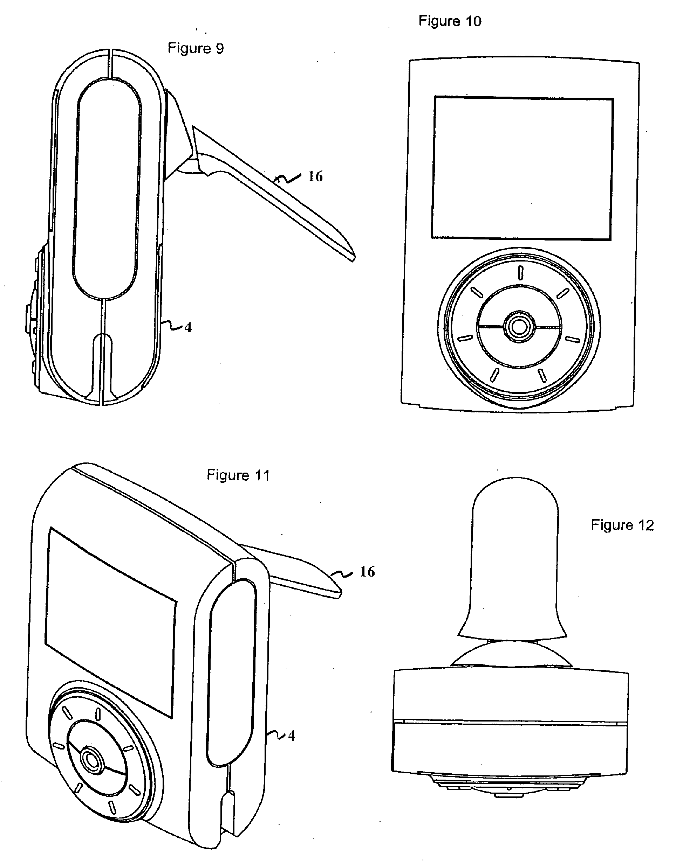

Referring to Figures 6, 8, 9, and 11 removable timer 4 is provided with a belt clip 16. Belt clip 16 allows the removable timer to be clipped to the user's belt, shirt pocket, or other available supporting apparatus. Further, the belt clip 16 when deployed outwardly as shown in figure 9 provides a backing support which allows removable timer 4 to stand in an upright position apart from main unit 2. Referring to Figures 6 and 8, back cover 17 is provided to removable timer 4 to provide secure housing to the battery supply to removable timer 4.

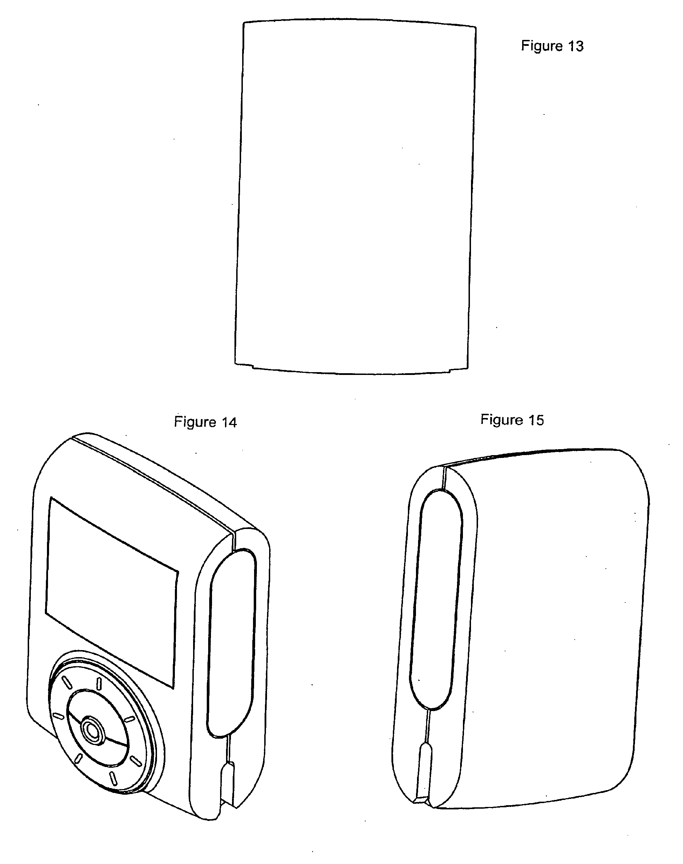

Referring to figure 13 removable timer 4 may also be provided without belt clip 16.

## Claims

1. A monitoring and reminder device comprising: a monitoring means to monitor a plurality of events; a display means to view a plurality of events; a reminder means to alert the user to the plurality of events being monitored; and a labeling means to assign descriptive labels to the plurality of events being monitored.

2. A monitoring and reminder device according to claim 1; wherein said monitoring means comprise a plurality of independent event monitors.

3. The monitoring and reminder device of claim 2 wherein the events include time, weather, weight, or voice messages.

4. An independent time monitor according to claim 2; wherein said time monitor is capable of monitoring the time periods for a plurality of events.

5. A monitoring and reminder device according to claim 2; wherein said independent time monitors have local time and worldwide time monitoring capability.

6. A monitoring and reminder device according to claim 2; wherein said monitoring means comprise a plurality of independent voice messages.

7. A monitoring and reminder device according to claim 2; wherein said monitoring means comprise a plurality of independent alarm clocks.

8. A monitoring and reminder device according to claim 2; wherein said monitoring means comprise a plurality of independent count-up and count down timers.

9. A monitoring and reminder device according to claim 1; wherein the labeling means comprise descriptive labels which may be selected from a pre-stored list or created and saved by the user.

10. A monitoring and reminder device according to claim 1; wherein the reminding means comprise audible, visual, LED, color change or vibration indications.

11. A monitoring and reminder device according to claim 1; wherein the display or displays means is made of using various display technologies including LCD, LED OLED, OLCD or others.

12. A monitoring and reminder device according to claim 1; wherein such device utilizes one or more displays

13. A monitoring and reminder device according to claim 1; wherein the removable timer is secured to the main unit.

14. A monitoring and reminder device according to claim 1; wherein the removable timer is detachable from the main unit.

15. A monitoring and reminder device according to claim 1; wherein said monitoring means is capable of monitoring temperature, humidity, barometric pressure, wind speed or various other weather related conditions.

16. A monitoring and reminder device according to claim 1; wherein such device is as set forth in figure 1.
